Europäisches Patentamt
European Patent Office
Office européen des brevets

(19)

(11) Numéro de publication: **0 346 169**
**A1**

(12)

# DEMANDE DE BREVET EUROPEEN

(21) Numéro de dépôt: **89401294.7**

(22) Date de dépôt: **10.05.89**

(51) Int. Cl.$^4$: **H 04 B 9/00**
H 04 J 9/00

(30) Priorité: **11.05.88 FR 8806400**

(43) Date de publication de la demande:
**13.12.89 Bulletin 89/50**

(84) Etats contractants désignés: **DE ES GB IT**

(71) Demandeur: **COMMISSARIAT A L'ENERGIE ATOMIQUE**
**31/33, rue de la Fédération**
**F-75015 Paris (FR)**

(72) Inventeur: **Breuze, Gérard**
**9Bis, rue Lamartine**
**F-78470 Saint Rémy Les Chevreuse (FR)**

**Carnet, Bernard**
**1, rue Renan**
**F-78460 Chevreuse (FR)**

**Friant, Alain**
**41 rue Charles de Gaulle**
**F-91440 Bures sur Yvette (FR)**

(74) Mandataire: **Mongrédien, André et al**
**c/o BREVATOME 25, rue de Ponthieu**
**F-75008 Paris (FR)**

## (54) Procédé et système de transmission de signaux paquets par liaison optique.

(57) L'invention se rapporte à un procédé et à un système de transmission de signaux numériques par paquets entre au moins deux stations (S1, S2) d'émission et/ou de réception reliées par fibres optiques (3), dans lesquels au moins une des deux stations est équipée de moyens d'émission (100) comportant un émetteur optique (106) et des moyens de modulation (150) du signal optique de l'émetteur qui comportent des moyens de génération (105) d'un signal caractéristique de modulation apte à moduler le signal optique dans l'intervalle séparant deux paquets, le signal transmis étant un signal composite, et dans lesquels l'autre station est équipée de moyens de réception (200) comportant un détecteur optique (201) et des moyens de démodulation (250) du signal composite détecté, aptes à discriminer les signaux numériques paquets du signal caractéristique.

Application à la transmission de signaux numériques par paquets.

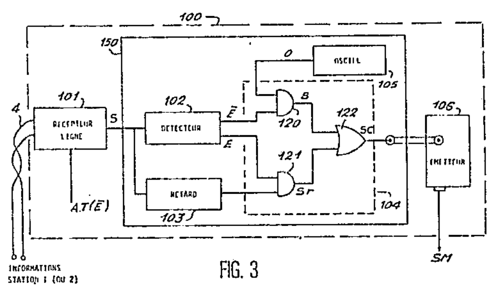

FIG. 3

FIG. 4

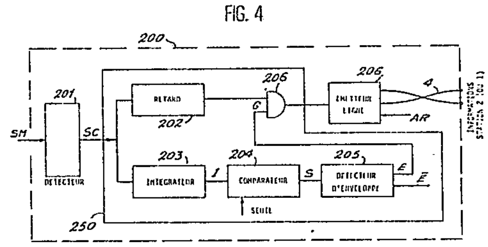


EP 0 346 169 A1

## Description

# PROCEDE ET SYSTEME DE TRANSMISSION DE SIGNAUX PAQUETS PAR LIAISON OPTIQUE

L'invention concerne un procédé et un système de transmission de signaux numériques par paquets entre au moins deux stations d'émission et/ou de réception reliées par fibres optiques.

Lorsque l'on transmet des signaux numériques par paquets, les signaux sont généralement codés selon les techniques classiques de codage HDLC, HDB3, CMI.

Dans une transmission par fibres optiques, le transport des données numériques se fait sur une ou plusieurs fibres optiques qui véhiculent une onde lumineuse modulée par les signaux numériques, l'onde étant émise par un émetteur optique tel qu'une diode laser ou une diode électroluminescente. Il s'agit d'une modulation de l'onde émise à deux niveaux de puissance qui représentent les niveaux logiques 0 et 1.

On préfère généralement l'emploi de diodes laser en tant que source d'émission optique, car elles permettent d'avoir un bilan de liaison en puissance suffisant, soit en pratique un bilan qui est supérieur ou égal à 30 dBm.

L'emploi de diodes laser n'est toutefois pas sans inconvénient car il faut tout d'abord prévoir un dispositif de stabilisation en température car elles sont très sensibles aux variations de températures.

Par ailleurs, comme une faible variation de courant de seuil d'une diode laser induit une forte variation de puissance optique émise, il est nécessaire de prévoir une boucle d'asservissement pour la régulation de la puissance optique.

Or, lorsque l'on effectue une modulation du signal lumineux émis par une diode laser avec des signaux numériques se présentant par paquets, la rapidité de la boucle d'asservissement est insuffisante, ce qui entraîne une réponse oscillatoire amortie.

De toute façon, même dans le cas où l'on n'emploie pas de diode laser mais des diodes électroluminescentes, si la transmission par fibres optiques se fait en milieu hostile comme c'est le cas par exemple dans un environnement radioactif, il se produit des phénomènes de photocoloration endommageant les fibres.

La présente invention permet de remédier à ces problèmes.

La présente invention a pour objet un procédé de transmission de signaux numériques par paquets et un système de transmission permettant de mettre en oeuvre le procédé qui consiste à ajouter pendant les périodes de silence entre deux paquets, un signal de modulation de caractéristiques différentes des informations utiles transportées dans chaque paquet.

L'invention a plus particulièrement pour objet un procédé de transmission de signaux numériques par paquets entre au moins deux stations d'émission et/ou de réception reliées par fibres optiques dans lequel on module le signal d'un émetteur optique par les signaux numériques paquets, principalement caractérisé en ce que le signal transmis est obtenu en outre par une modulation du signal de l'émetteur optique durant les intervalles séparant deux paquets à partir d'un signal de modulation de caractéristiques différentes des signaux numériques paquets.

Avantageusement, on procède à une modulation du signal optique à fréquence différente de la fréquence des signaux numériques paquets et plus particulièrement à une fréquence supérieure à celle des signaux numériques paquets.

L'invention a également pour objet un système de transmission de signaux numériques par paquets entre au moins deux stations d'émission et/ou de réception reliées par fibres optiques, principalement caractérisé en ce qu'au moins une des deux stations est équipée de moyens d'émission comportant un émetteur optique et des moyens de modulation du signal optique de l'émetteur comprenant des moyens de génération d'un signal caractéristique de modulation apte à moduler le signal optique dans l'intervalle séparant deux paquets, le signal transmis étant un signal composite, et principalement caractérisé en ce que l'autre station est équipée de moyens de réception comportant un détecteur optique et des moyens de démodulation du signal composite détecté, aptes à discriminer les signaux numériques paquets du signal caractéristique.

Avantageusement, les moyens de modulation du signal optique reçoivent les signaux numériques paquets, et se composent :

- d'un détecteur d'enveloppe des signaux numériques paquets,
- d'un circuit à retard recevant en même temps que le détecteur les signaux numériques paquets,
- d'un oscillateur permettant de générer le signal caractéristique proprement dit de modulation des intervalles inter-paquets,
- d'un circuit logique de commutation relié à l'émetteur optique et qui reçoit le signal de l'oscillateur, le signal d'enveloppe des signaux numériques paquets, et les signaux numériques paquets, ce circuit commutant le signal de l'oscillateur entre deux paquets.

Avantageusement, les moyens de démodulation reçoivent le signal composite détecté, et se composent :

- d'un circuit à retard recevant le signal composite détecté,
- d'un intégrateur recevant également le signal composite détecté, et délivrant un signal d'intégration,
- d'un comparateur à seuil recevant le signal d'intégration et délivrant les signaux numériques paquets dépourvus du signal caractéristique,
- d'un détecteur d'enveloppe recevant le signal délivré par le comparateur et délivrant le signal enveloppe des signaux paquets,
- d'un circuit logique recevant le signal enveloppe et le signal composite retardé, permettant de ne prendre en compte que les signaux numériques paquets.

Selon un exemple de réalisation, chaque station est équipée de moyens d'émission comportant des moyens de génération d'un signal caractéristique de modulation et de moyens de réception comportant des moyens de démodulation du signal composite transmis par la liaison fibres optiques.

Selon l'invention, l'émetteur optique peut être constitué soit par une diode laser, soit par une diode électroluminescente. Avantageusement, le récepteur optique est constitué par une photodiode.

Selon l'invention, le système de transmission comporte une station maître munie de moyens d'émission de données numériques paquets, de moyens d'émission d'adresses numériques paquets et de moyens de réception de données numériques paquets, et l'autre station est une station esclave soumise à des radiations nucléaires et qui comporte des moyens de réception de données numériques paquets, des moyens de réception d'adresses numériques paquets et des moyens d'émission de données numériques paquets, les moyens d'émission de la station maître comportant des émetteurs optiques constitués par des diodes laser et des détecteurs optiques constitués par des photodiodes à avalanche, les moyens d'émission de la station esclave comportant un émetteur optique constitué par une diode électroluminescente et les moyens de réception comportant des détecteurs optiques constitués par des photodiodes.

L'invention sera mieux comprise à la lecture de la description qui suit et à l'examen des figures qui l'accompagnent. Cette description n'est donnée qu'à titre indicatif et nullement limitatif des caractéristiques de l'invention. Sur ces figures, les mêmes repères désignent les mêmes éléments. Ces figures représentent :

- la figure 1, le schéma général d'un système de transmission selon l'invention ;
- la figure 2, le diagramme de signaux numériques obtenus selon la présente invention ;
- la figure 3, le schéma de réalisation des moyens de modulation du signal d'un émetteur optique d'une station de transmission selon l'invention ;
- la figure 4, le schéma de réalisation selon l'invention des moyens de démodulation du signal composite reçu par une des stations de transmission selon l'invention ;
- la figure 5, un exemple de réalisation du récepteur de ligne 101 de l'une des stations de transmission selon la figure 3 ;
- la figure 6, un exemple de réalisation de l'intégrateur et du comparateur conformément à la figure 4 ;
- la figure 7, le diagramme de signaux obtenus par les moyens de démodulation 250 selon la figure 4 ;
- la figure 8, un système de transmission selon l'invention conformément à une application particulière.

L'invention se rapporte à un procédé de transmission de signaux numériques par paquets entre au moins deux stations S1, S2 reliées par un ou plusieurs câbles constitués de fibres optiques repérées par la référence 3.

Bien entendu chaque station S1, S2 est équipée de moyens de traitement 10, 20 qui sont classiques en soi, et qui permettent de générer et de traiter les signaux transmis par la liaison optique 3. En fonction de l'application particulière réalisée à partir du système de transmission, chaque station est équipée de moyens d'émission 100 et/ou de réception 200.

Le procédé de transmission selon l'invention s'applique tout aussi bien à un système de transmission dans lequel chacune des deux stations est équipée de moyens d'émission et réception ou bien dans lequel l'une des deux stations est équipée de moyens d'émission, l'autre étant équipée de moyens de réception.

Les signaux transitent entre les moyens d'émission et/ou de réception et les moyens de traitement à l'intérieur d'une station à partir d'une ligne bifilaire 4.

La transmission entre les deux stations S1 et S2 s'opère sur des signaux numériques sous forme paquets qui peuvent être codés par des techniques classiques, comme par exemple, le code HDLC, HDB3, CMI.

Le procédé selon l'invention consiste à insérer un signal caractéristique entre deux paquets de manière à obtenir un signal tel que représenté sur la figure 2 qui comporte des paquets de données A de durée variable, ces paquets ayant une fréquence de récurrence F donnée et un signal B dit "caractéristique" ayant au moins une caractéristique différente des signaux numériques de donnée A. Le signal B peut avoir une phase ou une amplitude ou une fréquence différente du signal A. A titre indicatif, le signal B qui a été choisi présente une fréquence différente et plus particulièrement une fréquence supérieure à la fréquence des signaux numériques paquets.

La figure 3 représente des moyens de modulation du signal optique de l'émetteur optique équipant l'une des stations.

Les moyens d'émission d'au moins une des deux stations du système de transmission comportent un émetteur optique 106, des moyens de modulation du signal optique de l'émetteur 150, un récepteur de ligne 101.

L'émetteur optique peut être réalisé à partir d'une diode électroluminescente ou d'une diode laser équipée de façon classique d'un circuit de régulation de puissance et d'un circuit de stabilisation en température. L'émetteur optique envoie sur la ligne de transmission un signal modulé par le signal de sortie des moyens de modulation 150. Le signal transmis SM est transporté par une ou plusieurs fibres optiques selon l'application.

Les moyens de modulation reçoivent un signal numérique paquets S issu d'un récepteur de ligne classique en soi 101 qui est relié par la ligne bifilaire 4 au circuit de traitement de la station.

Le récepteur de ligne 101 reçoit un signal AT d'autorisation de transmettre. Dès la réception de ce signal le récepteur 101 transmet le signal numérique paquets au modulateur 150. Ce modulateur comporte un détecteur 102 et un circuit à retard 103 qui reçoivent en même temps le signal S. Le détecteur 102 est apte à délivrer le signal enveloppe E des signaux numériques paquets, il délivre également le signal inversé $\overline{E}$.

Le signal caractéristique B est obtenu à partir, par exemple d'un oscillateur 105. Un circuit logique de commutation 104, relié par sa sortie à l'émetteur optique, reçoit d'une part le signal 0 de l'oscillateur 105, d'autre part, le signal E du détecteur 102 et également le signal inversé $\overline{E}$ de ce détecteur 102 et le signal Sr retardé par le circuit 103.

Ce circuit logique 104 permet d'insérer entre deux paquets des impulsions issues de l'oscillateur et formant le signal B. Le signal obtenu est un signal composite SC tel que représenté sur la figure 2. C'est ce signal composite qui module l'onde lumineuse émise par l'émetteur 106. Le signal SM ainsi modulé est transmis par la liaison optique.

Le circuit logique de commutation 104 comporte de préférence une première porte logique assurant une fonction ET entre le signal 0 issu de l'oscillateur 105 et le signal enveloppe inversé $\overline{E}$ issu du détecteur 102 et délivre le signal B. Ce circuit 104 comporte une deuxième porte logique 121 ayant une fonction ET qui reçoit d'une part le signal enveloppe E et le signal S retardé par le circuit 103 de manière à ce que ces deux signaux arrivent en même temps et que la porte ET 121 délivre le signal ainsi retardé. Le circuit 104 comporte en outre une porte OU exclusif 122 qui permet d'insérer le signal B entre deux paquets d'information.

Sur la figure 4. on a représenté les moyens de réception équipant l'autre station. Ces moyens comportent un détecteur optique 201, des moyens de démodulation 250 du signal composite transmis et détecté, ces moyens étant aptes à discriminer les signaux numériques paquets du signal caractéristique inséré entre les paquets. Ces moyens comportent également, de façon classique, un émetteur de ligne 207 qui est relié par la ligne bifilaire 4 au circuit de traitement des informations reçues et/ou émises. Ce circuit 207 reçoit un signal AR d'autorisation de recevoir.

Le signal composite modulé SM transmis par la ligne optique est reçu par le détecteur 201 constitué de manière classique, soit par des photodiodes à avalanche, soit par tout autre photodétecteur classique. Le signal composite détecté SC est appliqué à un circuit de démodulation 250. Ce circuit 250 comporte un circuit à retard et un intégrateur qui reçoivent simultanément le signal SC.

Le signal de sortie de l'intégrateur 203 est appliqué à un circuit comparateur à seuil 204, le signal de sortie du comparateur est appliqué à un détecteur d'enveloppe 205 et le détecteur d'enveloppe délivre le signal enveloppe des signaux numériques paquets E et également le signal inversé $\overline{E}$.

Le circuit à retard 202 délivre le signal composite retardé avec un retard tel que le signal E d'enveloppe du paquet d'informations arrive en même temps que ce signal composite et soit appliqué simultanément aux entrées d'une porte logique 206 assurant une fonction ET. Cette porte logique 206 permet de ne délivrer que les signaux numériques paquets et les transmet à l'émetteur de ligne 207.

A titre d'exemple indicatif et nullement limitatif, le récepteur de ligne 101 représenté sur la figure 3 peut être réalisé, tel que représenté sur la figure 5, à partir d'un circuit SN75173 dont la sortie est reliée à un circuit SN7400, formé d'une porte NON- ET et d'un inverseur, l'autre entrée de la porte NON-ET recevant le signal d'autorisation de transmettre, ce signal pouvant être directement le signal d'enveloppe inversé E, provenant du détecteur d'enveloppe 205 des moyens de démodulation qui équipent les moyens de réception de cette station.

A titre tout à fait indicatif également, le circuit détecteur 102 peut être réalisé à partir d'un circuit SN 74123.

Le circuit à retard 202 peut être réalisé à partir d'un circuit 74LS00 constitué d'une série de portes inverseuses. L'oscillateur 105 peut être réalisé au moyen d'un circuit 74S124. Le circuit intégrateur 203 peut être réalisé selon le schéma détaillé donné à partir de la figure 6. Sur cet exemple de réalisation, le circuit 203 comporte en série deux portes inverseuses 220, 221, suivies d'une résistance 223 à laquelle est relié, par une électrode, un condensateur 224, une autre électrode du condensateur étant par exemple reliée à la masse. Le circuit intégrateur RC délivre le signal I tel que représenté sur la figure 7. Ce signal I est appliqué à l'entrée négative du comparateur à seuil 230 qui reçoit sur son entrée positive un seuil prédéterminé Tr.

Le comparateur 230 peut par exemple être réalisé à partir d'un circuit LM 319 connecté tel que représenté sur le schéma de la figure 6. La sortie de ce circuit 230 est reliée, d'une part par une résistance 231 à la borne positive de la tension d'alimentation V du circuit, d'autre part à une entrée du circuit du détecteur 205, ce circuit pouvant être par exemple réalisé à partir d'un circuit SN 74123.

L'émetteur de ligne 207 peut, par exemple, être réalisé au moyen d'un circuit 75172 dont la borne d'entrée E reçoit le signal issu de la porte logique 206 dont la borne d'entrée G reçoit le signal enveloppe issu de la sortie Q du circuit 205.

Le circuit à retard 202 est par exemple réalisé à partir d'un circuit SN7408 constitué d'une série de portes inverseuses.

Sur la figure 8 on a représenté un système de transmission conforme à l'invention correspondant à une application particulière.

Ce système de transmission comporte une station de transmission S1 qui est une station maître et qui va permettre de commander au moyen de la liaison optique 3 la station S2 esclave.

La station S2 est, par exemple, selon cette application installée dans une usine pilote de retraitement des combustibles irradiés et permet de contrôler la commande d'un servo-manipulateur mobile tandis que la station S1 maître se trouve en dehors de cette cellule chaude de l'usine.

Le support de transmission est constitué de trois fibres optiques dont l'une véhicule les adresses de la station de commande vers le servo-manipulateur et les deux autres, les données dans chaque sens.

La transmission des données et des adresses s'effectue par paquets de durée variable de 5 à 100 microsecondes toutes les millisecondes. Chaque station est donc équipée de trois voies, une voie pour les données dans un sens, une voie pour les données dans l'autre sens et une voie pour les adresses qui ne transitent que dans un seul sens, c'est-à-dire le sens maître vers esclave.

La voie émission de données et la voie émission d'adresses de la station maître comportent, relié à une ligne bifilaire, un récepteur de ligne 101 suivi d'un modulateur tel que décrit à propos de la figure 3, conformément à l'invention, suivi d'un émetteur optique 106.

La voie réception de cette station maître comporte un détecteur optique 201 suivi d'un démodulateur 250, tel que décrit à propos de la figure 4, conformément à l'invention, suivi d'un émetteur de ligne 207 relié par la ligne bifilaire. Selon cette application particulière, on a utilisé des diodes laser comme émetteurs optiques 106 et une photodiode à avalanche comme détecteur optique 201.

La station esclave comporte également trois voies, deux voies de réception et une voie d'émission. Les deux voies de réception permettent de recevoir les données et les adresses envoyées par la station maître et la voie d'émission permet de transmettre des données à la station maître.

Chaque voie de réception comporte un détecteur optique 201 suivi d'un démodulateur 250 tel que représenté à la figure 4 conformément à l'invention, suivi d'un émetteur de ligne 207.

La voie émission comporte un récepteur de ligne 101 relié à la ligne bifilaire pour recevoir les données provenant du servo-manipulateur. Ce récepteur est suivi d'un modulateur 150 conformément à l'invention, tel que représenté sur la figure 3, qui est lui-même suivi d'un émetteur optique 106. Dans cette application particulière, la station esclave est équipée de photodétecteurs et l'émetteur optique est constitué d'une diode électroluminescente.

Les fibres optiques du câble de la liaison de transmission 3 sont raccordées respectivement sur un détecteur optique ou sur un émetteur optique.

Le procédé permet, dans cet exemple de transmission entre une zone active (station maître) et une zone inactive (station esclave) de placer une diode laser en zone inactive afin d'optimiser le bilan de puissance. Il permet d'autre part, grâce à l'onde de remplissage insérée entre les paquets d'informations utiles, de favoriser le phénomène de photodécoloration, ce qui évite l'endommagement des fibres soumises à des irradiations et, également, de supprimer des instabilités de la boucle d'asservissement de la diode laser utilisée.

## Revendications

1. Procédé de transmission de signaux numériques par paquets entre au moins deux stations d'émission et/ou de réception reliées par fibres optiques, dans lequel on module le signal d'un émetteur optique par les signaux numériques paquets, caractérisé en ce que le signal transmis est obtenu en outre par une modulation du signal de l'émetteur optique, durant les intervalles séparant deux paquets, à partir d'un signal de modulation de caractéristiques différentes des signaux numériques paquets.

2. Procédé de transmission selon la revendication 1, caractérisé en ce que le signal de modulation complémentaire du signal optique est un signal de fréquence différente de celle des signaux numériques paquets.

3. Procédé de transmission selon la revendication 1 ou 2, caractérisé en ce que le signal de modulation caractéristique est un signal de fréquence supérieure à celle des signaux numériques paquets.

4. Système de transmission de signaux numériques par paquets entre au moins deux stations (S1, S2) d'émission et/ou de réception reliées par fibres optiques (3), caractérisé en ce qu'au moins une des deux stations est équipée de moyens d'émission (100) comportant un émetteur optique (106) et des moyens de modulation (150) du signal optique de l'émetteur comprenant des moyens de génération (105) d'un signal caractéristique de modulation apte à moduler le signal optique dans l'intervalle séparant deux paquets, le signal transmis étant un signal composite, et en ce que l'autre station est équipée de moyens de réception (200) comportant un détecteur optique (201) et des moyens de démodulation (250) du signal composite détecté, aptes à discriminer les signaux numériques paquets du signal caractéristique.

5. Système de transmission selon la revendication 4, dans lequel les moyens de modulation (150) du signal optique reçoivent les signaux numériques paquets, caractérisé en ce que ces moyens comportent :
- un détecteur d'enveloppe (102) des signaux numériques paquets,
- un circuit à retard (103) recevant en même temps que le détecteur les signaux numériques paquets,
- un oscillateur (0) permettant de générer le signal caractéristique de modulation des intervalles interpaquets,
- un circuit logique de commutation (104) relié à l'émetteur optique qui reçoit le signal de l'oscillateur, le signal d'enveloppe des signaux numériques paquets, et les signaux numériques paquets et qui commute le signal de l'oscillateur entre deux paquets.

6. Système de transmission selon la revendication 4, dans lequel les moyens de démodulation (250) reçoivent le signal composite détecté, caractérisé en ce que ces moyens comportent :
- un circuit à retard (202) recevant le signal composite détecté,
- un intégrateur (203) recevant également le signal composite détecté et délivrant un signal d'intégration,
- un comparateur (204) à seuil recevant le signal d'intégration et délivrant les signaux numériques paquets dépourvus du signal caractéristique,
- un détecteur d'enveloppe (205) recevant le signal délivré par le comparateur et délivrant le signal enveloppe des signaux paquets,
- un circuit logique (206) recevant le signal enveloppe et le signal composite retardé et permettant de ne prendre en compte que les signaux numériques paquets.

7. Système de transmission selon l'une quelconque des revendications 1 à 6, caractérisé en ce que chaque station (S1, S2) est équipée de moyens d'émission comportant des moyens de modulation et de génération (150) d'un signal caractéristique de modulation et de moyens de réception comportant des moyens de démodulation (250) du signal composite transmis par la liaison fibres optiques.

8. Système de transmission selon l'une quelconque des revendications 4 à 7, caractérisé en ce que l'émetteur optique (106) est constitué par une diode laser.

9. Système de transmission selon la revendication 8, caractérisé en ce que le récepteur optique (201) est constitué par une photodiode.

10. Système de transmission selon l'une quelconque des revendications 4 à 9, caractérisé en ce que l'une des stations (S1) est une station maître et comporte des moyens d'émission (100) d'adresses numériques paquets et des moyens de réception (200) de données numériques paquets, en ce que l'autre station (S2) est une station esclave soumise à des radiations nucléaires et comporte des moyens de réception (200) de données numériques paquets, des moyens de réception (200) d'adresses numériques paquets et des moyens d'émission (100) de données numériques paquets ; en ce que les moyens d'émission (100) de la station maître (S1) comportent des émetteurs optiques (106) constitués par des diodes laser et des détecteurs optiques (201) constitués par des photodiodes à avalanche ; en ce que les moyens d'émission (100) de la station esclave (S2) comportent un émetteur optique (106) constitué par une diode électroluminescente et en ce que les moyens de réception (200) comportent des détecteurs optiques (201) constitués par des photodiodes.

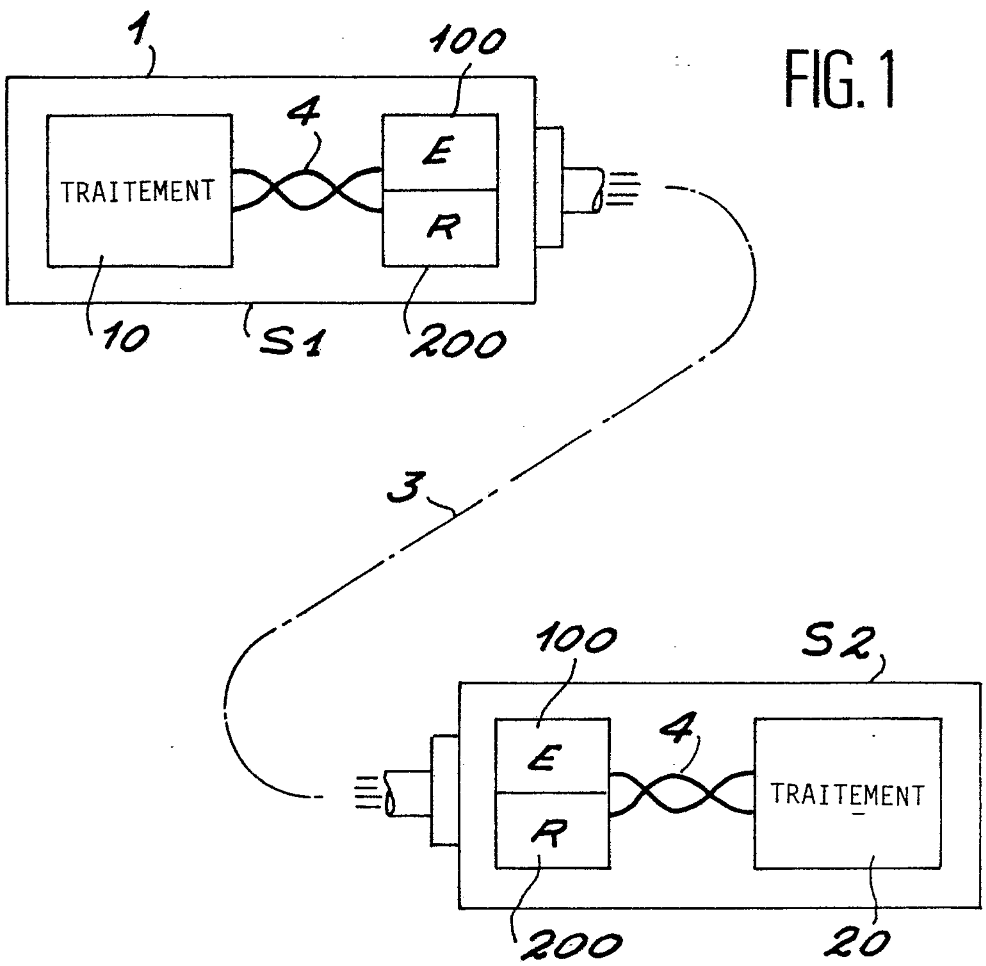
1
100
4
E
R
TRAITEMENT
10
S1
200
3
100
S2
4
E
R
TRAITEMENT
200
20

FIG. 1

FIG. 2

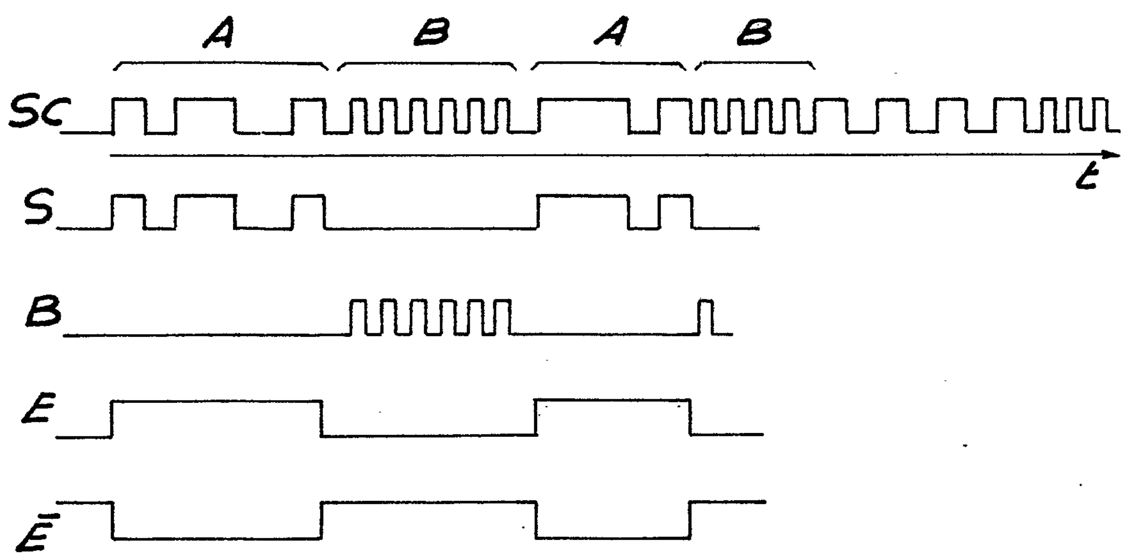
A
B
A
B
Sc
t
S
B
E
Ē

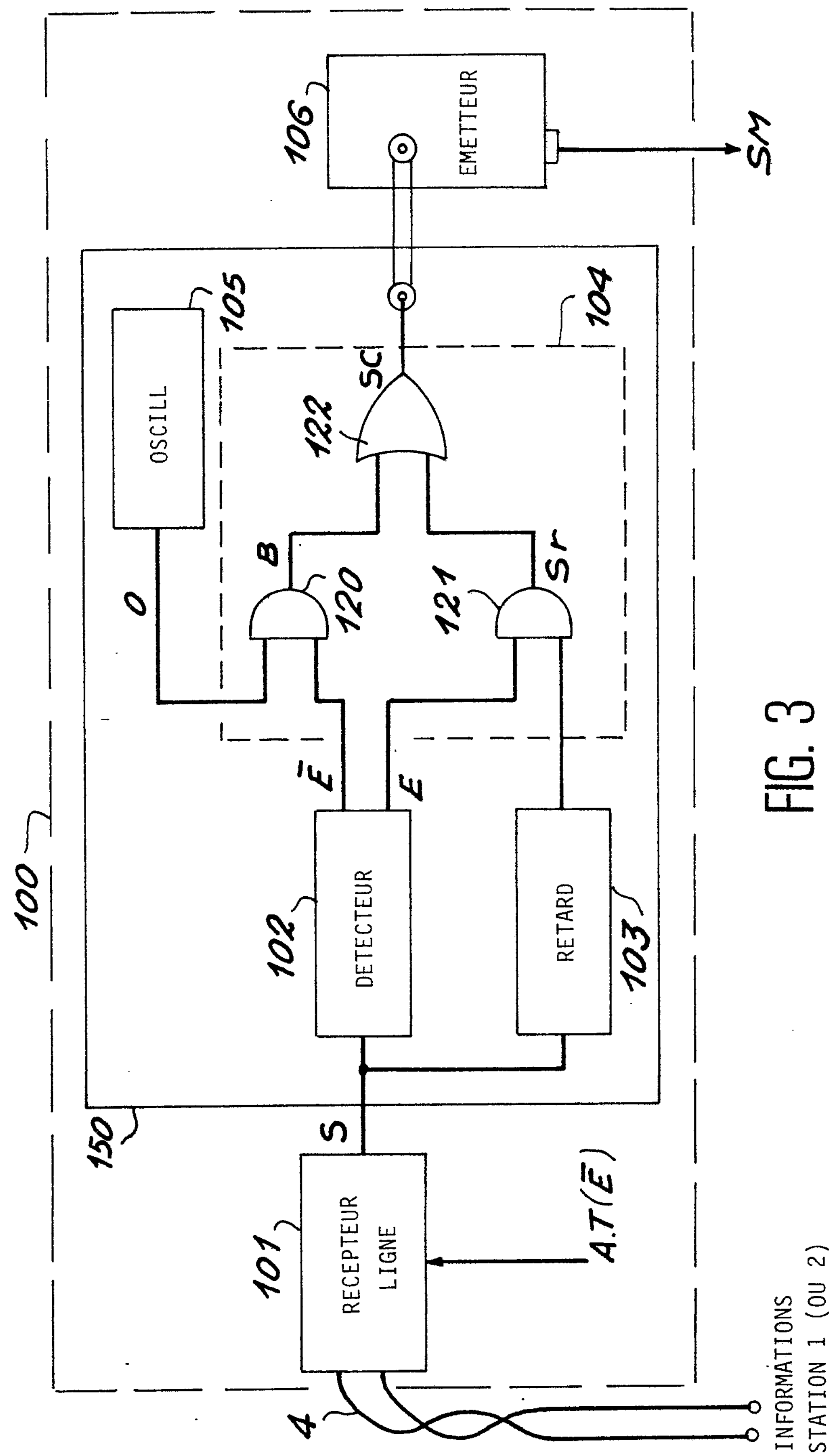
EMETTEUR
SM
106
105
104
OSCILL
SC
122
B
120
121
Sr
0
Ē
E
DETECTEUR
RETARD
100
102
103
150
S
RECEPTEUR LIGNE
101
A.T(Ē)
4
INFORMATIONS
STATION 1 (OU 2)

FIG. 3

FIG. 4

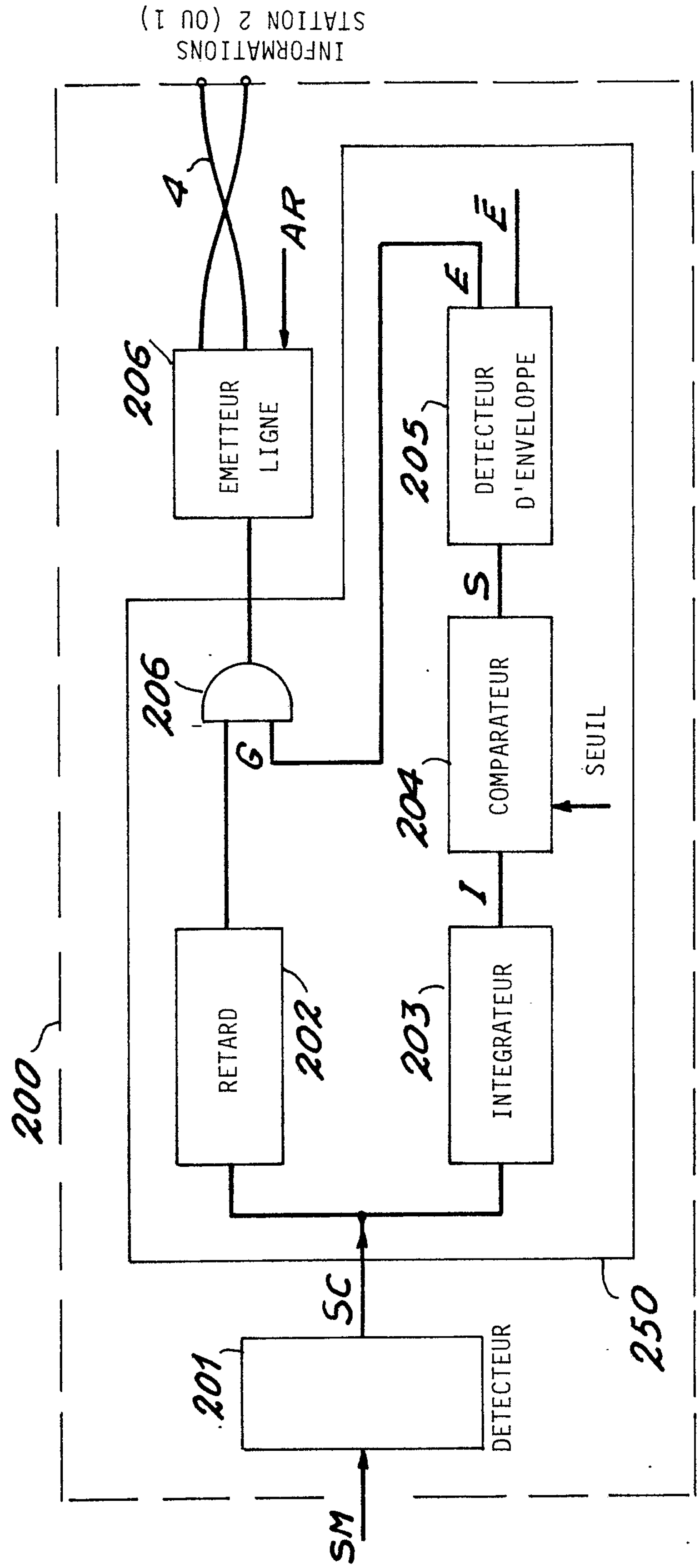
INFORMATIONS
STATION 2 (OU 1)
4
AR
206
EMETTEUR
LIGNE
Ē
E
205
DETECTEUR
D'ENVELOPPE
S
206
G
204
COMPARATEUR
SEUIL
I
RETARD
202
203
INTEGRATEUR
200
SC
201
DETECTEUR
250
SM

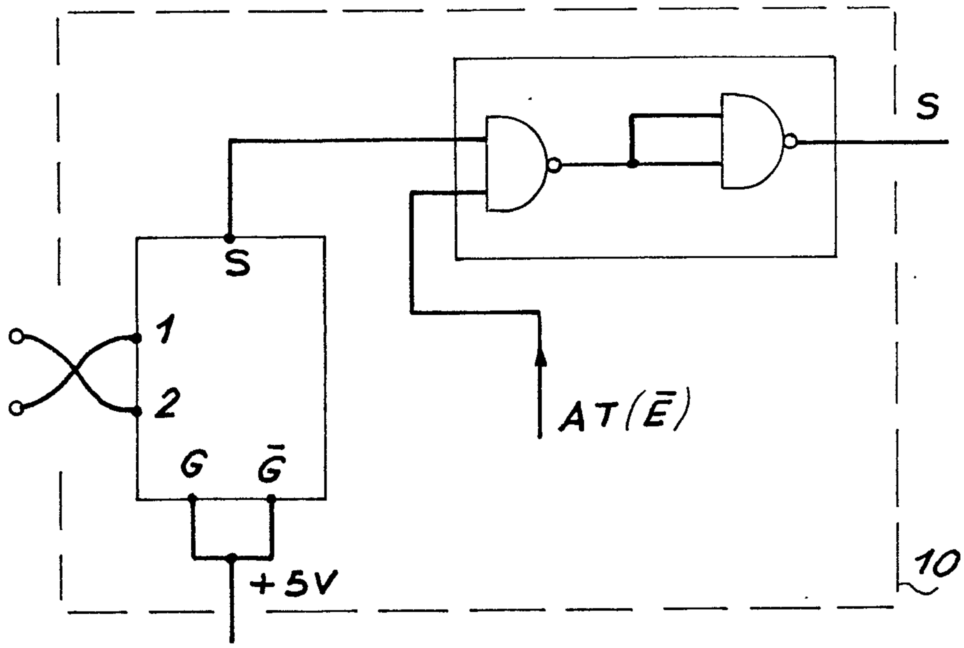


FIG. 5

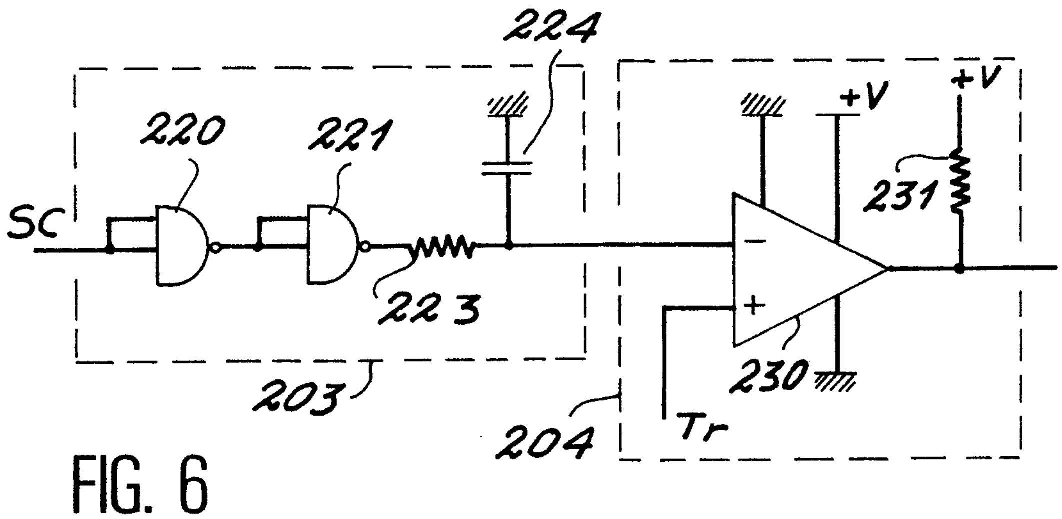


FIG. 6

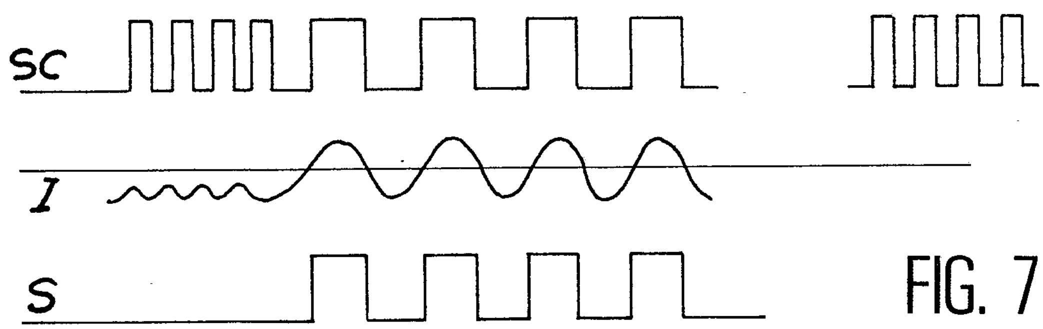


FIG. 7

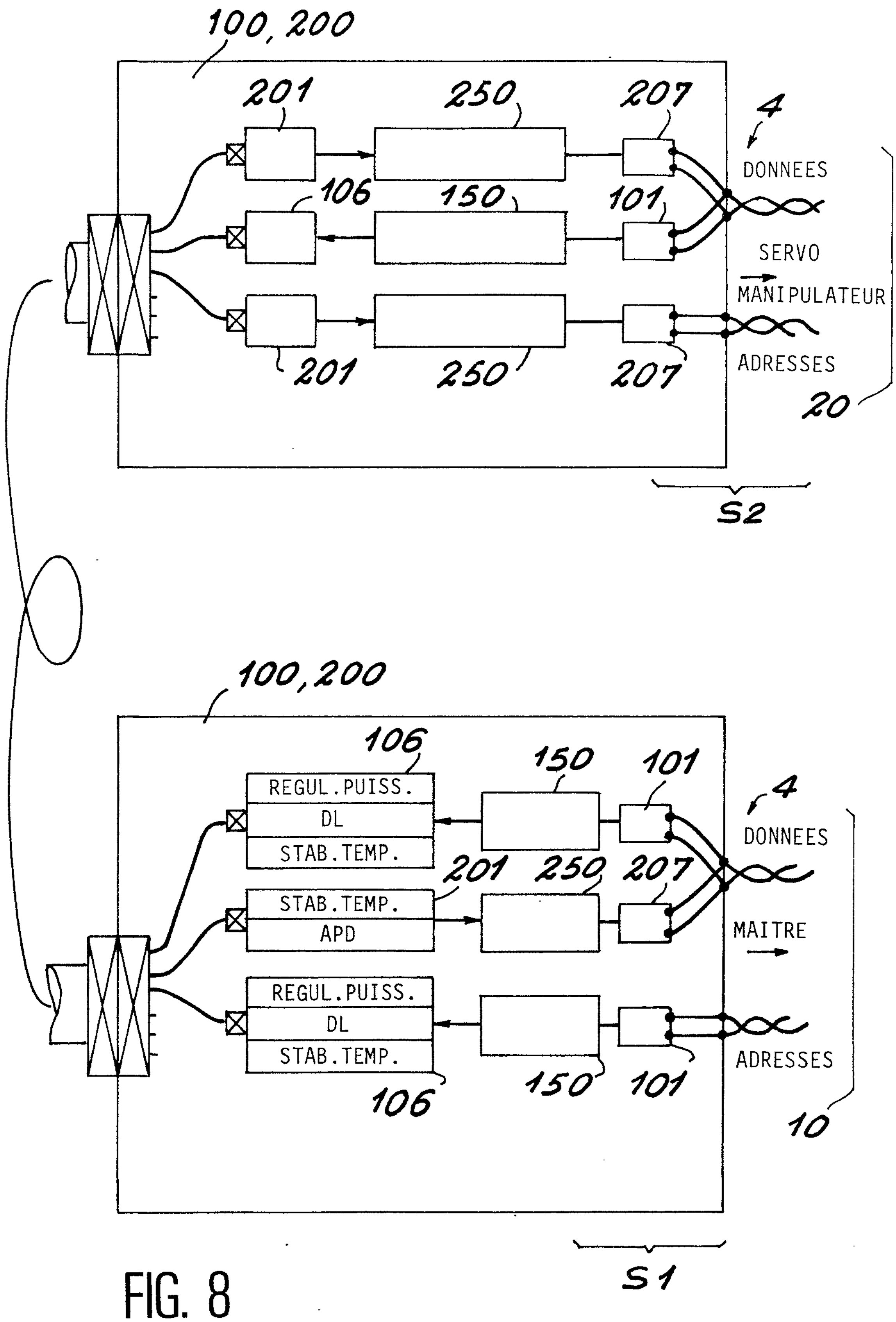
100, 200
201
250
207
4
DONNEES
106
150
101
SERVO
MANIPULATEUR
201
250
207
ADRESSES
20
S2
100, 200
106
REGUL.PUISS.
DL
STAB.TEMP.
150
101
4
DONNEES
201
250
207
STAB.TEMP.
APD
MAITRE
REGUL.PUISS.
DL
STAB.TEMP.
ADRESSES
106
150
101
10
S1

FIG. 8

Office européen des brevets

# RAPPORT DE RECHERCHE EUROPEENNE

Numero de la demande

EP 89 40 1294

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y<br>A | EP-A-0 192 795 (IBM)<br>* Résumé; page 12, lignes 24-33 *<br>--- | 1-3<br>4-10 | H 04 B 9/00<br>H 04 J 9/00 |
| Y | JOURNAL OF LIGHTWAVE TECHNOLOGY, vol. 6, no. 1, janvier 1988, pages 67-72, IEEE, New York, US; B.S. GLANCE et al.: "WDM coherent optical star network"<br>* Page 68, colonne 1, ligne 1 - page 69, colonne 1, ligne 37 * | 1-3 | |
| A | IDEM<br>--- | 4-10 | |
| A | PATENT ABSTRACTS OF JAPAN, vol. 10, no. 117 (E-400)[2174], 2 mai 1986; & JP-A-60 251 732 (NIPPON DENKI K.K.) 12-12-1985<br>* Résumé *<br>--- | 1-10 | |
| A | US-A-4 317 235 (TSUKADA)<br>* Colonne 5, lignes 15-19 *<br>----- | 1-10 | |
| | | | **DOMAINES TECHNIQUES RECHERCHES (Int. Cl.4)** |
| | | | H 04 B<br>H 04 J<br>H 04 L |

Le présent rapport a été établi pour toutes les revendications

| Lieu de la recherche | Date d'achèvement de la recherche | Examinateur |
|---|---|---|
| LA HAYE | 27-07-1989 | FILBRANDT P.W.M. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)